Europäisches Patentamt

European Patent Office

Office européen des brevets

(11) Publication number: **0 499 639 A1**

## EUROPEAN PATENT APPLICATION
### published in accordance with Art. 158(3) EPC

(21) Application number: 90913257.3

(22) Date of filing: 05.09.90

(86) International application number:
**PCT/JP90/01137**

(87) International publication number:
**WO 92/04496 (19.03.92 92/07)**

(51) Int. Cl.5: **D06M 11/00**, H01M 8/02,
C04B 38/00, C04B 35/10,
//D06M101:00

(43) Date of publication of application:
**26.08.92 Bulletin 92/35**

(84) Designated Contracting States:
**DE GB IT NL**

(71) Applicant: **Ishikawajima-Harima Heavy
Industries Co., Ltd.
2-1, Ohtemachi 2-chome
Chiyoda-ku, Tokyo 100(JP)**

(72) Inventor: **YAMAMASU, Yoshikazu, 3-32-3,
Mutsugawa Minami-ku
Yokohama-shi
Kanagawa 232(JP)**
Inventor: **KAKIHARA, Toshiaki, 6-18-3,
Todoroki
Setagaya-ku
Tokyo 158(JP)**

(74) Representative: **Schaumburg, Thoenes &
Englaender
Mauerkircherstrasse 31 Postfach 86 07 48
W-8000 München 86(DE)**

(54) **METHOD OF PRODUCING POROUS LITHIUM ALUMINATE FIBER AND COARSE PARTICLE.**

(57) A method of producing porous lithium aluminate fiber or coarse particle for use as a reinforcement of an electrolyte plate of a molten carbonate fuel cell, which comprises either reacting highly pure alumina fibers with a lithium compound at 500 to 1,000 ° C to give porous fibers (7) of lithium aluminate, or reacting coarse particles of an alumina/silica mixture with a carbonate containing lithium ions at 500 to 1,000 ° C and releasing the silica into the carbonate to give porous coarse particles (22) of lithium aluminate.

FIG.2

EP 0 499 639 A1

Technical Field

The present invention relates to processes for producing porous lithium aluminate fibers and coarse particles to be used as a reinforcement for an electrolyte plate of a molten carbonate type fuel cell in which the electrolyte plate is impregnated with a molten carbonate. The molten carbonate type fuel cell is one of the fuel cells used in the energy sector in which chemical energy of fuel is directly converted to electrical energy.

Background Art

In a molten carbonate type fuel cell proposed so far, a porous matrix tape is impregnated with a molten carbonate serving as an electrolyte, to form an electrolyte plate. The electrolyte plate is sandwiched between a cathode (oxygen electrode) and an anode (fuel electrode), and an oxidizing gas is supplied to the cathode side, while a fuel gas is supplied to the anode side to perform power generation between the cathode and the anode. Cells with such a construction are laid one on another, with a separator therebetween, to form a multilayer stack, which is fastened with an appropriate fastening force.

The electrolyte plate for used in the molten carbonate type fuel cell as mentioned above has hitherto been produced by a variety of methods. In one of such methods, a matrix having a multiplicity of vacancies is formed from ceramic particles, for instance, a powder of lithium aluminate ($LiAlO_2$), several micrometers or below in size, and the matrix is impregnated with an electrolyte to hold the electrolyte in the voids of the matrix, thereby obtaining the electrolyte plate.

The electrolyte plate obtained by the above method is used in the state of being sandwiched between a cathode and an anode, and is therefore required to provide perfect separation between an oxidizing gas supplied on the cathode side and a fuel gas supplied on the anode side. As the fuel cell is operated and stopped, however, the electrolyte plate receives great stresses due to repeated thermal transition between the room temperature and the operating temperature of the fuel cell (about 650°C). The maximum stress is generated at the time of transition of the electrolyte from a liquid phase to a solid phase when the fuel cell is turned off. The phase change is accompanied with a rapid change in volume and release of a certain amount of energy, which is relieved by causing a cracking in the electrolyte plate. If a crack piercing the electrolyte plate from face to back or vice versa is developed, the electrolyte plate can no longer maintain its ability to separate the oxidizing gas and the fuel gas from each other, so that the oxidizing gas and the fuel gas make direct contact with each other, leading to a lowering in the cell output or to the danger of explosion.

To obviate the above-mentioned problem, therefore, a number of proposals have been made. In one of the proposals, for instance, in forming a matrix using the above-mentioned lithium aluminate particles not greater than several micrometers as support particles in the production of the electrolyte plate, coarse particles of lithium aluminate (50-150 micrometer) much greater than the support particles, in an appropriate proportion (for example, in an amount of 10 vol% per 90 vol% of the support particles of lithium aluminate) so that the development of the cracks piercing the electrolyte plate from face to back or vice versa is blocked by the coarse particles of lithium aluminate mixed as above, and the coarse particles of lithium aluminate are used as a reinforcement of the electrolyte plate [Japanese Patent Application Laid-Open (KOKAI) No. 57-27569 (1982)]. In another proposal, long fibers of lithium aluminate having a length of not less than 100 micrometers and a ratio l/d of length l to diameter d of not less than 10 are entangled with one another to form a matrix, and an electrolyte is held in the vacancies formed through the entanglement of the long fibers of lithium aluminate [Japanese Patent Publicaiton No. 63-26511 (1988)].

According to the proposal disclosed in the Japanese Patent Application Laid-Open (KOKAI) No. 57-27569 (1982), however, the coarse particles of lithium aluminate are merely mixed into the matrix as a reinforcement (crack-suppressing particles) for the electrolyte plate, and the reinforcing coarse particles of lithium aluminate themselves are not so formed as to permit impregnation thereof with the electrolyte. Also, in the electrolyte plate proposed in the Japanese Patent Publication No. 63-26511 (1988), the long fibers of lithium aluminate to be entangled with one another to form the matrix are not themselves designed to be impregnated with the electrolyte. Thus, in any of the above forms of electrolyte plate, a carbonate as the electrolyte cannot be infiltrated into the coarse particles or long fibers of lithium aluminate. Therefore, at the time of solidification of the carbonate when the fuel cell is cooled from the operating temperature to the room temperature, a series of gaps will be generated at the boundaries between the periphery of the coarse particles or long fibers and the carbonate, and the gaps may pierce the electrolyte plate from face to back or vice versa.

The present inventors have found out that, when a carbonate used as an electrolyte in the production of an electrolyte plate for a fuel cell can be infiltrated into coarse particles or long fibers of lithium aluminate, the carbonate present in the coarse particles or long fibers will, upon solidification of the carbonate due to cooling of the fuel cell, be solidified as it is in continuity with the carbonate present in the surroundings of the coarse particles or long fibers and, therefore, the formation of a series of gaps around the coarse particles or long fibers is prevented. The present inventors have made further studies for rendering the coarse particles or long fibers of lithium aluminate porous, and as a result of the studies, have found out a process for rendering the lithium aluminate fibers or coarse particles themselves porous. This invention has been attained based on the findings.

It is accordingly an object of this invention to provide processes for producing porous lithium aluminate fibers and coarse particles themselves, for use as a reinforcement in the production of an electrolyte plate for a molten carbonate type fuel cell.

Summary of the Invention

This invention provides a process for producing porous lithium aluminate fibers in which polycrystalline high-purity alumina fibers are heated in an Li-containing compound to a temperature of 500 to 1000°C to react with Li, and the shape or arrangement of the particles constituting the alumina fibers is changed by the reaction of the fibers with Li to thereby obtain lithium aluminate fibers having pores inside thereof and in the surfaces thereof. For further enhancement of the functionality (for higher electrolyte-holding properties, wettability etc.) of the pore portions of the lithium aluminate fibers, it is preferable to provide a step of immersing the lithium aluminate fibers in an acidic aqueous solution. In addition, for obtaining pure lithium aluminate fibers, it is preferable to subject the porous lithium aluminate fibers to a decarbonating treatment comprising water washing and acid cleaning, thereby removing the carbonates remaining in the fibers.

Upon the reaction of the alumina fibers with Li, recrystallization occurs in the fibers to form pores in the fibers themselves. When the porous lithium aluminate fibers thus obtained are used as a reinforcement of an electrolyte plate, the carbonate as the electrolyte penetrates into the pores and, upon cooling of the fuel cell, is solidified as it is. As a result, the carbonate solidified inside the fibers becomes continuous with the carbonate surrounding the fibers; therefore, the formation of a series of gaps at the peripheries of the fibers is obviated.

This invention also provides a process for producing porous coarse particles of lithium aluminate which comprises the steps of binding a small number of silica particles and a large number of alumina particles to each other to form coarse particles, heating the coarse particles in a lithium ion-containing carbonate to a temperature of 500 to 1000°C so as to cause the silica particles in the coarse particles to be dissolved in the carbonate and to bring the alumina-based coarse particles, with vacancies formed therein by the dissolution of the silica particles, into reaction with lithium to form coarse particles of lithium aluminate, then cooling the coarse particles of lithium aluminate, then cooling the coarse particles of lithium aluminate and subjecting the cooled coarse particles of lithium aluminate to water washing and acid cleaning to obtain porous coarse particles of lithium aluminate.

Because each coarse particle is formed in the manner of enveloping a small number of silica particles with a large number of alumina particles and the silica particles are dissolved away from the coarse particle to form vacancies in the coarse particle, the diameter of the vacancies can be varied arbitrarily by regulating the diameter of the silica particles. When the porous coarse particles of lithium aluminate thus obtained are used as a reinforcement of an electrolyte plate, a carbonate as the electrolyte penetrates into the vacancies and, on cooling of the fuel cell, is solidified as it is. Therefore, the carbonate having penetrated into the vacancies is continuous with the carbonate in the vicinity of the reinforcement, so that a series of gaps is not formed at the peripheries of the reinforcement.

Brief Description of the Drawings

Figure 1 is a schematic illustration of one embodiment of production steps for carrying out a process according to this invention;
Figure 2 is a schematic illustration of one embodiment of use of lithium aluminate fibers, produced by the process of this invention, as a reinforcement for an electrolyte plate;
Figure 3 to 6 are photographs showing cross-section of lithium aluminate fibers obtained upon experiments under various conditions respectively;
Figure 7 is a schematic illustration of one embodiment of production steps for carrying out a process according to this invention;
Figure 8 is a schematic illustration of porous coarse particles of lithium aluminate produced by the process of this invention; and
Figure 9 is a schematic illustration of use of the porous coarse particles of lithium aluminate, produced by the process of this invention, as a reinforcement for an electrolyte plate.

Best Mode for carrying out the Invention

Some preferred embodiments of this invention will now be described below while referring to the drawings.

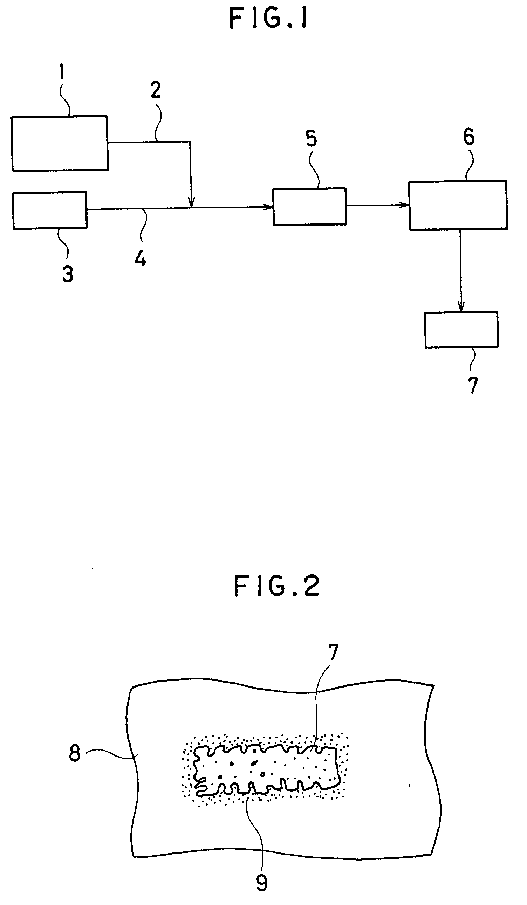

Figure 1 illustrates one embodiment of the steps for carrying out the process according to this invention. In the figure, there are shown a portion 1 for supplying polycrystalline high-purity alumina fibers 2 comprising a large number of alumina ($Al_2O_3$) particles arranged in fiber form and not containing impurities such as $SiO_2$, a portion 3 for supplying a Li-containing compound 4, a portion 5 for reacting the alumina fibers 2 with lithium in the Li-containing compound 4, a decarbonating treatment portion 6, which is adopted as required, and porous lithium aluminate fibers 7 as the product.

The production of the porous lithium aluminate fibers of this invention will be explained concretely. First, the polycrystalline high-purity alumina fibers 2 not containing impurities such as $SiO_2$ are fed out of the supply portion 1 and mixed into the Li-containing compound 4 fed from the Li-containing compound supply portion 3. The Li-containing compound 4 may be, for instance, $Li_2CO_3$, $LiOH$, $Li_2O$, $CH_3COOLi$ or a compound containing at least one of these compound, among which a coompound containing $Li_2CO_3$ is most preferred. The alumina fibers 2 have a length l of 10 to 1000 micrometers when used as short fibers, and a greater length when used as long fibers, and a diameter d of not less than 2 micrometers (the upper limit may be about 50 meters), with the ratio l/d being preferably not less than 10. Theoretically, the alumina fibers and the Li-containing compound may be used in such amounts as to provide equimolar amounts of Al and Li. In consideration of reactivity, however, the alumina fibers and the Li-containing compound are used in such amounts that Li is present in an excess amount of about 1 to 100 times the amount of Al.

Next, the alumina fibers 2 mixed in the Li-containing compound 4 are reacted with lithium at the lithium reaction portion 5 to form lithium aluminate fibers. The reaction with lithium is carried out by heating the alumina fibers 2 mixed in the Li-containing compound 4 to a temperature of 500 to 1000°Cfor about 5 to 100 hours in the lithium reaction portion 5, to form fibers having pores inside and in the surfaces thereof. Where a carbonate is used as the Li-containing compound, the carbonate is one which is solid (powdery) at the normal temperature and which is liquid at the time of reaction. The heating temperature for the reaction with lithium is set in the range of 500 to 1000°C because the reactivities of the reactants are extremely poor at a low temperatures below 500°Cand, on the other hand, a high temperature of above 1000°Cwould cause excessive progress of sintering, resulting in that the vacancies grown in the fibers might be too small or broken down. Where a salt other than carbonate is used as the Li-containing compound, the heating temperature is set to be not lower than the melting temperature of the salt used. The reactivities and the shape and size of the vacancies formed in the fibers are capable of being controlled as desired, by combining appropriately the kind of the compound, the heating temperature, the heating time and the reaction atmosphere (partial pressure of oxygen etc.). The partial pressure of oxygen in the reaction atmosphere is controlled, for example, by supplying air or an inert gas into the reaction atmosphere and exhausting $CO_2$ or the like, as required.

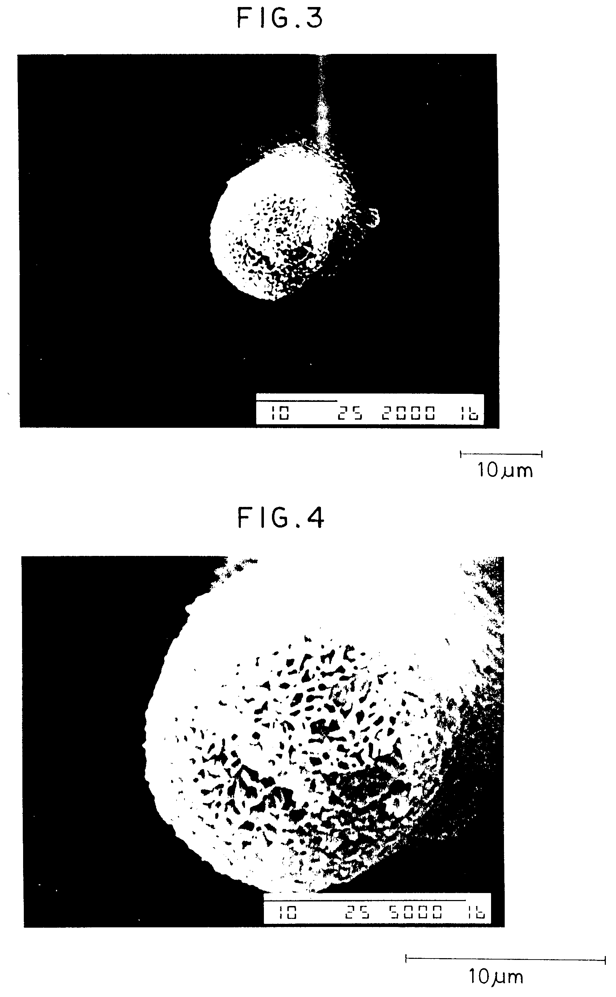

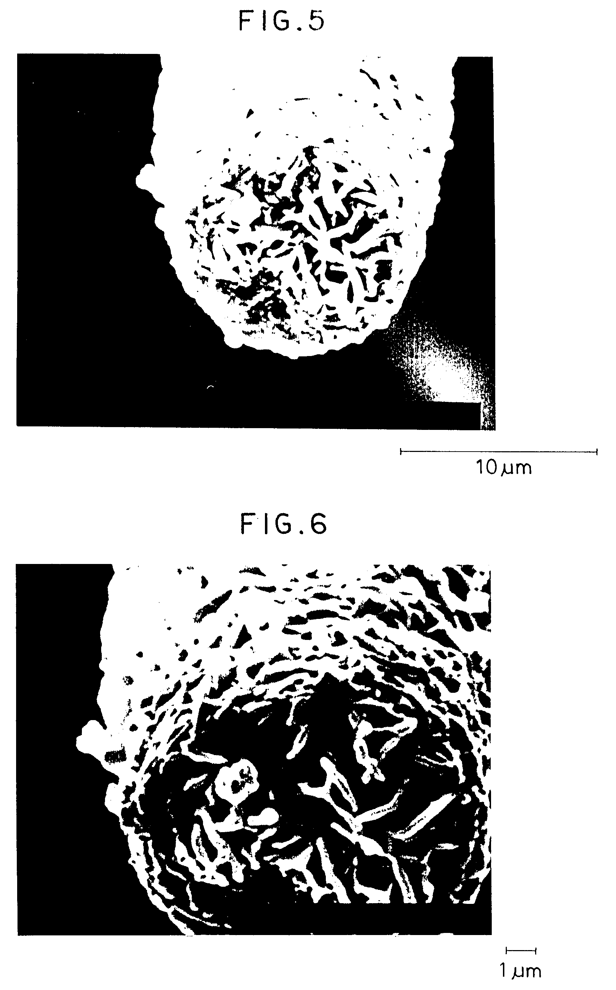

When the alumina fibers as mentioned above were reacted with lithium in a carbonate at 700°C for 20 hours, lithium aluminate fibers having cross-sections as shown in the photographs in Figures 3 and 4 and the photographs in Figures 5 and 6 were obtained. The photograph (x 2000) in Figure 3 and the photograph (x 5000) in Figure 4 show the lithium aluminate fibers obtained by the reaction under a low partial pressure of oxygen, while the photograph (x 5000) in Figure 5 and the photograph (x 7500) in Figure 6 show the lithium aluminate fibers obtained by the reaction under an excess partial pressure of oxygen.

In order to enhance the purity of the lithium aluminate fibers 7 obtained by the above-mentioned reaction of the alumina fibers with lithium, the lithium aluminate fibers 7 are subjected, after cooling, to water washing and acid cleaning in the decarbonating treatment portion 6 to remove the carbonate remaining in the fibers. This treatment, however, is not essentially required, and therefore can be omitted, if the initial carbonate component is selected taking into account the composition of the carbonate which will penetrate and be left in the fibers. In carrying out the decarbonating treatment, the washing temperature and the immersion times in water and in an acid solution may be controlled arbitrarily according to the washing effect and the surface treatment effect. Where a carbonate is used, the cleaning is carried out preferably using a solution of acetic acid or acetic acid compound or a mixed solution thereof. The acid treatment used in obtaining the lithium aluminate fibers shown in the photographs in Figures 3, 4, 5 and 6 was immersion in a mixed solution of hydroxyacetic acid $[CH_2(OH)COOH]$/acetic acid $(CH_3COOH)$/ethyl acetate $(CH_3COO_2H_5)$ for 24 hours.

The functionality (for higher electrolyte-holding properties, wettability etc.) of the pore portions formed inside and in the surfaces of the porous lithium aluminate fibers 7 obtained by the above-mentioned steps can be enhanced by adding, to the process, a step of immersing the porous lithium aluminate fibers 7 in an acidic solution. Besides, the lowering in the fiber strength caused as the alumina fibers 2 become porous through the reaction with lithium can be restrained by heating the fibers to a temperature of not lower than 1000°C after the above treatments. It is thereby possible to recover the fiber strength to a level of about 1/3 times the initial strength of the alumina fibers 2.

The porous lithium aluminate fibers 7 produced by the process as described above are used as a reinforcement of an electrolyte plate constituting a fuel cell. When the porous lithium aluminate fibers 7 produced according to this invention are mixed into ceramic particles used as support particles for forming a matrix of the electrolyte plate, as partly shown in Figure 2, to thereby form the matrix 8 of the electrolyte plate and then the matrix 8 is impregnated with a molten carbonate 9 serving as an electrolyte, the molten carbonate 9 penetrates into the vacacies in the lithium aluminate fibers 7 serving as the reinforcement. Therefore, when the molten carbonate 9 is solidified as the fuel cell is cooled from the operating temperature (650°C) to the room temperature, the molten carabonate 9 present in the vacancies in the lithium aluminate fibers 7 is solidified as it is in continuity with the carbonate 9 in the vicinity of the lithium aluminate fibers 7. Consequently, generation of a series of gaps at the peripheries of the lithium aluminate fibers 7 is prevented. Furthermore, even if cracks occurring on both sides of the electrolyte plate reach the lithium aluminum fibers 7, the fibers 7 are able to prevent the cracks from piercing the electrolyte plate from face to back or vice versa.

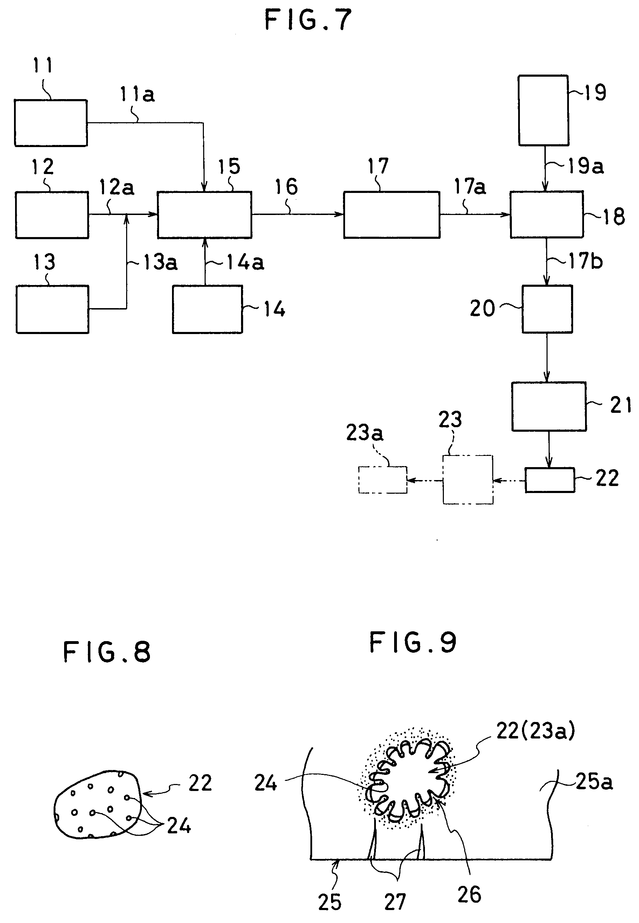

Figure 7 illustrates one embodiment of the steps for carrying out the process for producing porous coarse particles of lithium aluminate according to this invention. In the figure, there are shown a portion 11 for supplying silica ($SiO_2$) 11a, a portion 12 for supplying alumina ($Al_2O_3$) 12a, a portion 13 for supplying a dispersant 13a, a portion 14 for supplying a binder 14a, a mixing treatment portion 15 for mixing the silica 11a and the alumina 12a with the binder 14a to form a slurry 16, a granulating treatment portion (granulator) 17, a lithium reaction portion 18 at which coarse particles 17a formed in a predetermined particle size at the granulating treatment portion 17 are heated in a lithium ion-containing carbonate 19a to cause the silica 11a contained in the coarse particles 17a to be dissolved in the carbonate 19a and to react the remaining alumina 12a with lithium, a portion 19 for supplying the lithium ion-containing carbonate 19a, a cooling part 20, a decarbonating treatment portion 21 for subjecting the coarse particles to water washing and acid cleaning to remove the carbonate remaining in the coarse particles, and porous coarse particles of lithium aluminate 22 as the product. Also shown in the figure are a high-temperature heating portion 23 used as required for enhancing the strength of the porous coarse particles of lithium aluminate, and rigid coarse particles of lithium aluminate 23a obtained at the high-temperature heating portion 23.

The production of the porous coarse particles of lithium aluminate of this invention according to the above-mentioned production steps will now be explained concretely.

First, a large number of particles of alumina ($Al_2O_3$) 12a are dispersed with the dispersant 13a. Then, these alumina particles 12a and a small number of particles of silica ($SiO_2$) 11a are mixed with a binder (e.g., polyvinyl alchohol) 14a in the mixing treatment portion 15, to form a slurry 16. The slurry 16 is placed into the granulating treatment portion 17, whereby coarse particles 17a are formed which each comprises a small number of particles of silica 11a mixed in a large number of paritcles of alumina 12a. The small number of particles of silica 11a, used for forming vacancies in the coarse particles 17a as will be explained below, are 1 to 10 micrometers in diameter. Each of the above-mentioned large number of particles of alumina 12a has a diameter of about 0.01 to 10 micrometers, and a particle diameter of 0.01 to 1 micrometer is preferred in view of easy control of the diameter of the coarse particles and easy formation of spherical paritcles. The diameter of the individual coarse particles 17a formed in the granulating treatment portion 7 is 0.5 to 200 micrometers.

Next, the coarse particles 17a of 0.5 to 200 micrometer diameter formed as above are heated in the lithium ion-containing carbonate 19a to a temperature of about 500 to 1000°C at the lithium reaction portion 18. By this treatment, the above-mentioned small number of particles of silica 11a in the coarse particles 17a are dissolved away into the carbonate 19a, thereby leaving vacancies 24 in the coarse particles 17a as shown in Figure 8, while the coarse particles consisting essentially of the remaining alumina 12a are reacted with lithium, whereby the coarse particles 17a are converted into coarse particles of lithium aluminate 17a. The coarse particles of lithium aluminate 17a are then subjected to water washing and acid cleaning at the decarbonating treatment portion 21, to become porous coarse particles of lithium aluminate 22 having the vacancies 24 therein.

The lithium ion-containing carbonate 19a in the above explanation is ordinarily one which is solid (powdery) at the normal temperature and which is melted upon being heated; however, a lithium ion-containing carbonate prepared initially in a liquid state may also be used. The heating temperature for the reaction with lithium is set in the range of 500 to 1000°C, which is the optimum range, because the reaction rate is very low at temperatures

below 500°C, whereas a temperature of above 1000° causes sintering of the coarse particles 17b after the reaction or of the alumina 12a itself to proceed to such an extent that the coarse particles obtained will have a small diameter or the vacancies 24 formed in the coarse particles of lithium aluminate 17b will be narrowed or broken down. The cooling at the cooling portion 10 is carried out by formed cooling (as in a stream of gas or the like) or slow cooling (furnace cooling ) according to the required properties of the coarse particles (size, vacancy or pore diameter etc.). In this case, the cooling time is not particularly limited.

Though the above embodiment has been explained with reference to the steps of heating the coarse particles 17a to a temperature of 500 to 1000°C in the lithium ion-containing carbonate at the lithium reaction portion 18 to dissolve away the silica 11a from the coarse particles 17a, thereby rendering the coarse particles porous, and to react the remaining alumina with lithium, thereby forming the coarse particles of lithium aluminate 17b, and then subjecting the coarse particles of lithium aluminate 17b, after cooling, to the decarbonating treatment to obtain the porous coarse particles of lithium aluminate 22 as the product, the water washing and acid cleaning steps carried out for the decarbonating treatment at the decarbonating treatment portion are not essentially required, and therefore can be omitted, if the initial carbonate component is selected taking into account the composition of the carbonate which is contained in the coarse particles. Where such a selection is not made, however, the water washing and acid cleaning steps are necessary, and these steps enable a surface treatment of the particles (inclusive of the surfaces of the particles and the surfaces of the vacancies). By incorporating the water washing and acid cleaning steps into the process, therefore, it is possible to remove the carbonate remaining in the coarse particles of lithium aluminate.

A specific method of carrying out the above-mentioned decarbonating treatment will now be explained. First, the coarse particles are washed with hot water, and neutralized with acetic acid or the like. Then, the neutralized coarse particles are immersed in an aqueous solution of acetic acid or the like (the immersion time and the composition of the solution may be arbitrarily set), then washed with alchohol, and finally dried.

When the diameter of the vacancies 24 in the porous coarse particles of lithium aluminate 22 obtained by the production steps as mentioned above is large, for enhancing the strength the coarse particles 22 are again heated to 1000°C or above at the high-temperature heating portion 23 shown in Figure 7, thereby consolidating the particles to obtain rigid porous coarse particles of lithium aluminate 23a.

The porous coarse particles of lithium aluminate 22 or 23a produced by the process as mentioned above are used as a reinforcement of an electrolyte plate of a fuel cell. That is, in forming a matrix by using fine particles of lithium aluminate or other ceramic as support particles, the porous coarse particles of lithium aluminate 22 or 23a having a large number of vacancies 24 therein produced according to this invention are mixed into the support particles to form the matrix 25a of the electrolyte plate 25, as partly shown in Figure 9, and the matrix 25a is impregnated with a molten carbonate 26 serving as an electrolyte. As a result, the molten carbonate 26 penetrates into the vacancies 24 in the porous coarse particles of lithium aluminate 22 or 23a functioning as the reinforcement. Therefore, when the molten carbonate 26 is solidified as the fuel cell is cooled from the operating temperature (650°C) to the room temperature, the molten carbonate 26 present in the vacancies 24 is solidified as it is in continuation with the carbonate 26 present in the vicinity of the coarse particles 22 or 23a. Thus, formation of a series of gaps at the peripheries of the coarse particles 22 or 23a is obviated. In addition, even if cracks 27 developed on both sides of the electrolyte plate 25 reach the coarse particles 22 or 23a, the cracks 27 would be prevented from peircing the electrolyte plate from face to back or vice versa.

Though in the above embodiment shown in Figure 7 as the production steps according to this invention a small number of particles of silica ($SiO_2$) 11a and a large number of particles of alumina ($Al_2O_3$) 12a have been described as being mixed with the binder 14a at the mixing treatment portion 15 to form the slurry 16, the method of biding the silica 11a and the alumina 12a to each other is not limited to the above-mentioned method, and may be a method in which electrostatic attraction is used or a mechanical force is utilized.

## Industrial Applicability

As has been described above, when the lithium aluminate fibers or coarse particles according to this invention are used as a reinforcement of an electrolyte plate in a molten carbonate type fuel cell, namely, when the aluminate fibers or coarse particles of this invention are mixed, as a reinforcemnt, into a matrix of ceramic particles to form an electrolyte holding plate having a multiplicity of vacancies and the electrolyte holding plate is impregnated with a molten carbonate, the reinforcement itself is impregnated with the carbonate, whereby the formation of a series of gaps at the peripheries of the reinforcement is prevented and a favorable electrolyte plate free of cracks is obtained.

**Claims**

1. A process for producing porous lithium aluminate fibers which comprises:

mixing polycrystalline high-purity alumina fibers into a lithium (Li)-containing compound; and

heating the alumina fibers in the Li-containing compound to a temperature of 500 to 1000°C to react the alumina fibers with lithium, thereby producing lithium aluminate fibers having pores inside as well as in the surface thereof.

2. The process as set forth in claim 1, wherein each high-purity alumina fibers has a diameter of 2 to about 50 micrometers and a length l of 10 to 1000 micrometers.

3. The process as set forth in claim 1, wherein each high-purity alumina fiber has a ratio l/d of length l to diameter d of not less than 10.

4. The process as set forth in claim 1, wherein the Li-containing compound is mixed with the high-purity alumina fibers in such an amount that 1 to 100 moles of Li is present per mole of Al.

5. The process as set forth in claim 4, wherein the Li-containing compound is selected from, for example, $Li_2CO_3$, LiOH, $Li_2O$, $CH_3COOLi$ and the like.

6. The process as set forth in claim 1, wherein in heating the alumina fibers in the Li-containing compound to react the alumina fibers with lithium, the partial pressure of oxygen in the reaction atmosphere is controlled.

7. The process as set forth in claim 1, wherein the lithium aluminate fibers obtained upon the reaction of the alumina fibers with lithium are subjected to a decarbonating treatment to remove carbonates remaining in the fibers.

8. The process as set forth in claim 7, wherein the decarbonating treatment conprises water washing and acid cleaning.

9. A process for producing porous coarse particles of lithium aluminate which comprises:

binding a small number of silica particles and a large number of alumina particles to each other so as to form coarse particles;

heating the coarse particles in a lithium ion-containing carbonate to a temperature of 500 to 1000°C so as to cause the sillica particles in the coarse particles to be dissolved in the carbonate, with the attendant formation of vacancies in the coarse particles, and to bring the alumina-based coarse particles with the vacancies formed therein into reaction with lithium to form coarse particles of lithium aluminate; and

cooling the coarse particles of lilthium aluminate with the vacancies therein to obtain porous coarse particles of lithium aluminate.

10. The process as set forth in claim 9, wherein the coarse particles are formed from a slurry which is prepared by dispersing the large number of alumina particles in a dispersant, and mixing the resultant dispersion with the silica particles and a binder.

11. The process as set forth in claim 10, wherein the particle diameter of each silica particles is 1 to 10 micrometers.

12. The process as set forth in claim 11, wherein the particle diameter of each alumina particle is 0.01 to 10 micrometers, preferably 0.01 to 1 micrometer.

13. The process as set forth in claim 10, wherein the individual coarse particles are formed to be 0.5 to 200 micrometers in size.

14. The process as set forth in claim 9, wherein the lithium ion-containing carbonate includes a mixture of a compound selected from LiOH, $Li_2O$ and $CH_3COOLi$ with a carbonate, or $Li_2CO_3$.

15. The process as set forth in claim 9, wherein the coarse particles of lithium aluminate are subjected to a decarbonating treatment to remove the carbonate remaining in the coarse particles.

16. The process as set forth in claim 15, wherein the decarbonating treatment comprises:

washing the coarse particles of lithium aluminate in hot water;

neutralizing the washed coarse particles of lithium aluminate with acetic acid or the like;

immersing the neutralized coarse particles of lithium aluminate in an aqueous solution of acetic acid;

washing the coarse particles of lithium aluminate with alcohol; and

drying the thus washed coarse particles of lithium aluminate.

**17.** A process for producing an electrolyte plate used in a molten carbonate type fuel cell which comprises:

mixing polycrystalline porous lithium aluminate fibers into a lithium (Li)-containing compound, and heating the alumina fibers in the Li-containing compound to a temperature of 500 to 1000°C so as to react the alumina fibers with lithium, thereby forming a reinforcement which includes coarse particles of lithium aluminate fibers having pores inside thereof and in the surface thereof;

mixing the reinforcement into a matrix of ceramic particles to form a porous plate; and

impregnating the porous plate with a molten carbonate to form the electrolyte plate.

**18.** A process for producing an electrolyte plate used in a molten carbonate type fuel cell which comprises:

binding a small number of silica particles and a large number of alumina particles to each other so as to form coarse particles, heating the coarse particles in a lithium ion-containing carbonate to a temperature of 500 to 1000°C so as to cause the silica particles in the coarse particles to be dissolved in the carbonate, with the attendant formation of vacancies in the coarse particles, and to bring the alumina-based coarse particles with the vacancies formed therein into reaction with lithium to form coarse particles of lithium aluminate, and cooling the coarse particles of lithium aluminate with the vacancies therein to form a reinforcement having the porous coarse particles of lithium aluminate;

mixing the reinforcement into a matrix of ceramic particles to form a porous plate; and

impregnating the porous plate with a molten carbonate to form the electrolyte plate.

# FIG.1

# FIG.2

## FIG.3

10μm

## FIG.4

10μm

## FIG.5

10 μm

## FIG.6

1 μm

# FIG.7

# FIG.8

# FIG.9

# INTERNATIONAL SEARCH REPORT

International Application No PCT/JP90/01137

**I. CLASSIFICATION OF SUBJECT MATTER** (if several classification symbols apply, indicate all) ⁶

According to International Patent Classification (IPC) or to both National Classification and IPC

Int. Cl⁵    D06M11/00, H01M8/02, C04B38/00, 35/10//D06M101:00

**II. FIELDS SEARCHED**

Minimum Documentation Searched

| Classification System | Classification Symbols |
|---|---|
| IPC | D06M11/00, 11/38, H01M8/02, C04B38/00, 35/10 |

Documentation Searched other than Minimum Documentation
to the Extent that such Documents are Included in the Fields Searched ⁸

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| X | JP, A, 48-28938 (United Aircraft Corp.), 17 April 1973 (17. 04. 73), & US, A, 38782968, DE, A1, 2238137 | 1, 4, 5 |
| X | JP, B2, 63-26511 (Hitachi, Ltd.), 30 May 1988 (30. 05. 88), (Family: none) | 1-3, 5 |
| X | JP, A, 58-129777 (Hitachi, Ltd.), 2 August 1983 (02. 08. 83), (Family: none) | 1-5, 17 |
| X | JP, A, 58-128670 (Hitachi, Ltd.), 1 August 1983 (01. 08. 83), (Family: none) | 17 |
| Y | JP, A, 52-48600 (Institut of Gas Technology), 18 April 1977 (18. 04. 77), & US, A, 3998939 & DE, A1, 2637096 | 1, 5 |
| Y | JP, A, 63-151615 (Kyushu Taika Renga K.K.), 24 June 1988 (24. 06. 88), (Family: none) | 1, 4, 5 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 24, 1990 (24. 10. 90) | November 13, 1990 (13. 11. 90) |

| International Searching Authority | Signature of Authorized Officer |
|---|---|
| Japanese Patent Office | |

Form PCT ISA 210 (second sheet) (January 1985)

International Application No. PCT/JP90/01137

| | FURTHER INFORMATION CONTINUED FROM THE SECOND SHEET | |
|---|---|---|

| Y | JP, A, 48-28938 (United Aircraft Corp.), 17 April 1973 (17. 04. 73), & US, A, 3878296 & DE, A1, 2238137 | 17 |
| Y | JP, A, 58-129775 (Hitachi, Ltd.), 2 August 1983 (02. 08. 83), (Family: none) | 17 |
| A | JP, A, 52-48600 (Institut of Gas technology), 18 April 1977 (18. 04. 77), Column 2, page 1, DE, A1, 2637096 & US, A, 3998939 | 9 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers      . because they relate to subject matter not required to be searched by this Authority, namely:

2.☐ Claim numbers      , because they relate to parts of the international application that do not comply with the prescribed requirements to such an extent that no meaningful international search can be carried out, specifically:

3.☐ Claim numbers      , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

| FURTHER INFORMATION CONTINUED FROM THE SECOND SHEET | | |
|---|---|---|
| A | JP, A, 55-149179 (Denki Kagaku Kogyo K.K.), 20 November 1980 (20. 11. 80), Lines 7 to 10, column 5, page 2 (Family: none) | 9 |
| A | "Novel Cell" Vol.2, edited by Shiro Yoshizawa, 10 September 1979 (10. 09. 79), The Publishing Office of Tokyo Denki University, p.213-216 | 17, 18 |

**V.☐ OBSERVATIONS WHERE CERTAIN CLAIMS WERE FOUND UNSEARCHABLE ¹**

This international search report has not been established in respect of certain claims under Article 17(2) (a) for the following reasons:

1.☐ Claim numbers          , because they relate to subject matter not required to be searched by this Authority, namely:

2.☐ Claim numbers          , because they relate to parts of the international application that do not comply with the prescribed requirements to such an extent that no meaningful international search can be carried out, specifically:

3.☐ Claim numbers          , because they are dependent claims and are not drafted in accordance with the second and third sentences of PCT Rule 6.4(a).

**VI.☐ OBSERVATIONS WHERE UNITY OF INVENTION IS LACKING ²**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)